# EUROPEAN PATENT APPLICATION

(11) **EP 1 513 045 A2**
(43) Date of publication of application: **09.03.2005**
(21) Application number: 04020295.4
(22) Date of filing: 26.08.2004
(51) Int. Cl.: G06F 1/16

(54) **Docking station**

(30) Priority: 04.09.2003 US 654812
(71) Applicant: Kabushiki Kaisha Toshiba, Tokyo 105-8001 (JP)
(72) Inventor: Tanaka, Toshiyuki, Irvine CA (US); Nakamura, Hiroshi Toshiba Corporation, Minato-ku Tokyo 105-8001 (JP); Riddiford, Martin P., London NW1 6 DD (GB)
(74) Representative: Henkel, Feiler & Hänzel

(57) **Abstract**

A docking station (10) for connecting a portable computing device (400) to a network or other external device includes a first device (100) having a first mounting surface (150) and a connector (154) thereon to support and electrically connect to the computing device. The first mounting surface is rotationally mounted to a base, and slightly inclined with respect to the underside of the base. Such configuration allows the computing device to lie substantially horizontal and to be rotated about a substantially vertical axis. The station further includes a second supporting device (200) having a second mounting surface (202) to support the first device thereon. The second mounting surface is mounted on a base, and is significantly inclined with respect to its base. Such configuration allows the computing device to lie substantially vertical and to be rotated about a substantially horizontal axis.

## Description

This invention relates to a docking station.

Tablet computing devices are becoming increasingly popular. Similar to the way a person writes on a piece of paper, a tablet computing device accepts inputs from a user by way of a pen-like input device and a touch-sensitive display. That is, a software program controlling the tablet computing device causes. a display screen to be shown on a touch-sensitive display having regions which accepts inputs from a user using the pen-like input device. The user uses the pen-like input device to touch a sensitive region of the display, and the software program responds by performing a particular operation based on the specific region touched by the pen-like input device.

Like many other portable computing devices, such as laptop computers, personal digital assistants (PDAs), portable game devices, tablet computing devices are convenient because of their portability. That is, a user can easily carry a tablet computing device from location-to-location, such as between an office and a conference room, or between remote destinations while the user is on an airplane, train or other transportation vehicle. In addition, a user can readily use the tablet computing device while the device is lying on the user's lap or on a small table or in any other confined area.

Because of its portability, a user often needs to connect a tablet computing device to a network to access or provide information to a network and also to access resources available on the network. In response to such need, docking stations have been developed for interfacing a tablet computing device with a network or other device. However, these docking stations generally have fixed or stationary platforms, and are not easily moveable. Since a tablet computing device functions similar to a piece of paper, a relatively immobile docking station is inconvenient because it does not easily allow a user to change the orientation of the tablet computing device. For instance, lefthand users may prefer one orientation while right-hand users may prefer a different orientation. Furthermore, users may prefer to switch the orientation of the tablet computing device between landscape and portrait orientations.

An object of this invention is to provide a docking station which allows an user to change an orientation of a portable computing device in any direction easily.

A docking station according to claim 1 is characterized by comprising: a first device including a first mounting surface for supporting a portable computing device thereon, and a connector for mating with a corresponding connector of said portable computing device; a second device adapted for coupling to a first communications link; and a second communications link to couple said connector of said first device to said second device.

This summary of the invention does not necessarily describe all necessary features so that the invention may also be a sub-combination of these described features.

The invention can be more fully understood from the following detailed description when taken in conjunction with the accompanying drawings, in which;
FIG. 1 illustrates a perspective view of an exemplary docking station in accordance with an embodiment of the invention;
FIGS. 2A-2C illustrate perspective views of the exemplary docking station with a portable computing device mounted on a first supporting device respectively in first, second, and third orientations in accordance with another embodiment of the invention;
FIGS. 3A-3C illustrate perspective views of the exemplary docking station with the portable computing device respectively in fourth, fifth, and sixth orientations mounted on the first supporting device, and the first supporting device, in turn, mounted on the second supporting device in accordance with another embodiment of the invention;
FIGS. 4A-4B illustrate front and side views of the exemplary first supporting device in a first orientation in accordance with another embodiment of the invention;
FIG. 4C illustrates a front view of the exemplary first supporting device in a second orientation in accordance with another embodiment of the invention;
FIG. 4D illustrates a front view of the exemplary first supporting device in a third orientation in accordance with another embodiment of the invention;
FIGS. 5A-5B illustrate front and side views of the exemplary second supporting device in accordance with another embodiment of the invention;
FIGS. 6A-6B illustrate front and side views of the exemplary first supporting device mounted on the exemplary second supporting device in accordance with another embodiment of the invention; and
FIG. 7 illustrates a block and schematic diagram of the exemplary docking station in accordance with another embodiment of the invention.

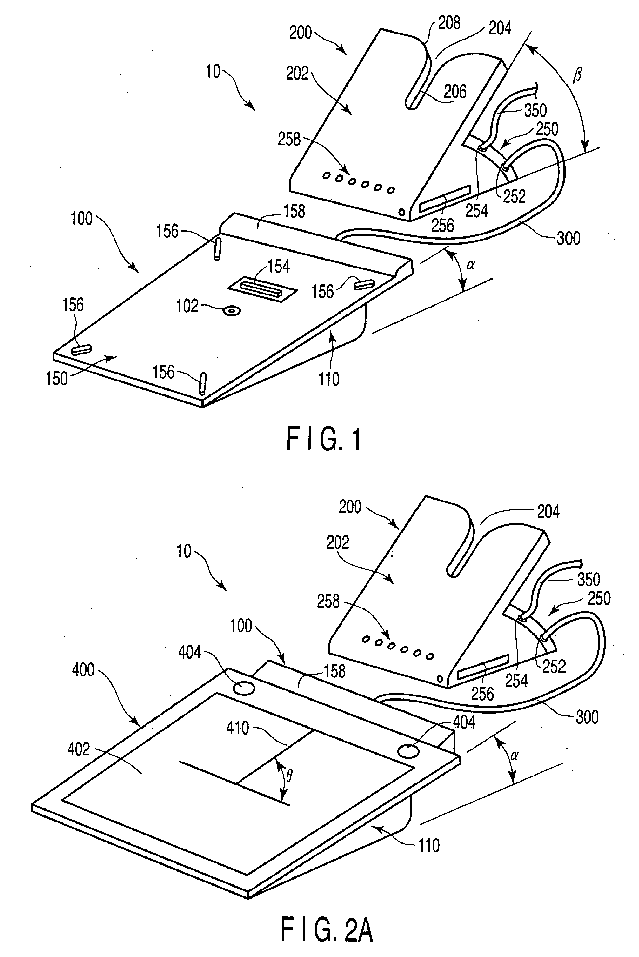

FIG. 1 illustrates a perspective view of an exemplary docking station 10 in accordance with an embodiment of the invention. The docking station 10 comprises a first supporting device 100, a second supporting device 200, and a first communications link 300 coupling together the first and second supporting devices 100 and 200. For this embodiment of the invention, a "communications link" is an interconnect over which data is transferred. Examples of communications links include, but are not limited or restricted to electrical wire, cable, optical fiber, or even wireless signaling technology.

As discussed below in more detail, the first supporting device 100 functions to support a portable computing device (not shown) in a first set of one or more orientations, and the second supporting device 200 functions to support the first supporting device 100 with the portable computing device mounted thereon in a second set of orientations. Examples of portable computing devices include, but are not limited to, laptop computers, tablet personal computers, personal digital assistants (PDAs), portable game devices, cameras, video devices, cellular phones, GPS navigation devices and other display devices.

In addition, the first supporting device 100 includes a connector 154 adapted for electrically connecting to a corresponding connector on a portable computing device. The connector 154 may be deployed with a selected pin configuration as such a RJ-45 connector, a Universal Serial Bus (USB) connector, a RS-232 connector, a BNC connector, UTP Ethernet connector, or the like. The second supporting device 200 includes a second communications link 350 for communicatively coupling to a network or other external device. Accordingly, a portable computing device properly docked onto the docking station 10 is communicatively coupled to a network or other external device by way of the first supporting device 100, the first communications link 300, the second supporting device 200, and the second communications link 350.

In more detail, the first supporting device 100 comprises a base 110 and a mounting surface 150. Adapted to support a portable computing device, the mounting surface 150 is rotationally mounted on the base 110 by way of an attachment device 102, namely a fastener such as a bolt and nut combination for example. The mounting surface 150 includes thereon a connector 154 for mating with a corresponding connector of a portable computing device, and one or more elastomeric support members 156 for making a gentle contact with the underside of the portable computing device. The mounting surface 150 may be inclined with respect to the bottom of the base 110 (which is typically disposed on a horizontal surface) by a relatively small angle α.

The first supporting device 100 further comprises a handle 158 attached or integral with the mounting surface 150. The handle 158 enables a user to more easily adjust the first supporting device 100 and rotate the mounting surface 150 with respect to the base 110.

The second supporting device 200 comprises a mounting surface 202 to which the first supporting device 100 mounts, and a base 250 which supports and may be integral with the mounting surface 202. The mounting surface 202 includes an engagement member 204, which engages with a corresponding member of the first supporting device 100. In this example, the engagement member 204 includes a groove having a lower portion 206 and an upper portion 208. As discussed in more detail below, the lower portion 206 of the groove 204, being narrower than the upper portion 208, is sized to receive the attachment device 102, thereby providing lateral stability of the first supporting device 100.

For one embodiment of the invention, lower portion 206 of the groove 204 receives a nut bolt of the attachment device 102. The upper portion 208 of the groove 204 receives a protrusion of the base 110, which is shaped to appropriately mate with the upper portion 208 of the groove 204. The mounting surface 202 is inclined with respect to the bottom of the base 250 (which is typically disposed on a horizontal surface) by a relatively large angle β (e.g., β > α).

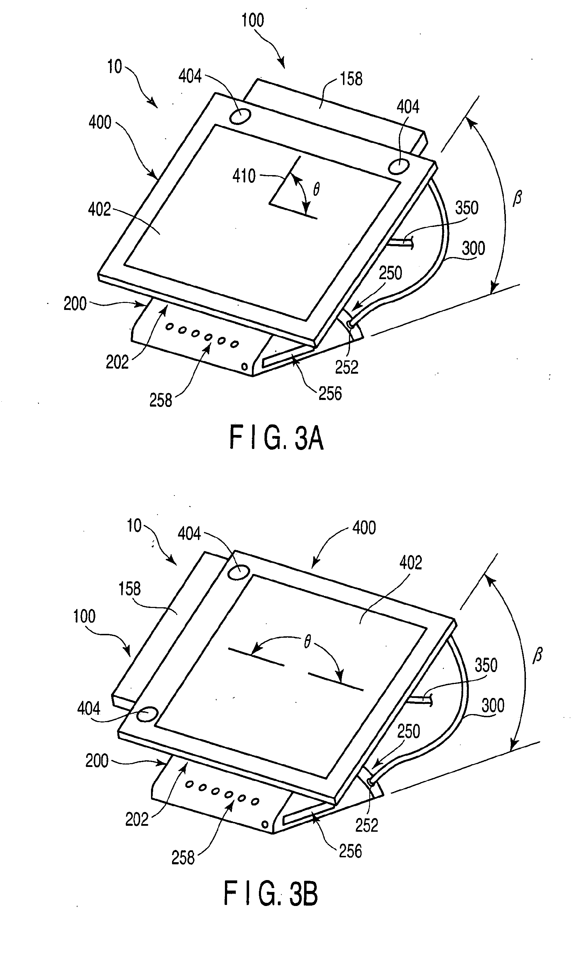

The base 250 of the second supporting device 200 may include openings 252 and 254 for the communications links 300 and 350, respectively. It is contemplated that these openings 252 and 254 may be connectors (e.g., network connector, printer connector, etc.) for communication links 300 and 350, respectively. The second supporting device 200 may further include an optical disc drive 256 (e.g. a digital versatile disc "DVD" drive) and/or other peripheral devices housed in the base 250. Control buttons 258 for the optical disc drive and/or other peripheral devices may be provided through a lower portion of the mounting surface 202. The docking station 10 allows a user to orient a portable computing device between first and second sets of orientations, as discussed with reference to FIGS. 2A-2C and 3A-3C, respectively.

FIG. 2A illustrates a perspective view of the exemplary docking station 10 with a portable computing device 400 mounted on the first supporting device 100 in a first orientation in accordance with another embodiment of the invention. In this example, the portable computing device 400 is a tablet computing device comprising a touch-sensitive display 402 and a pair of speakers 404. The portable computing device 400 mounts on the mounting surface 150 (see FIG. 1) of the first supporting device 100. The portable computing device 400 further includes a connector (not shown) on its underside which mates with the connector 154 of the first supporting device 100 as shown in FIG. 1.

In this first orientation, the portable computing device 400 is inclined with respect to the bottom of the base 110 (which is typically disposed on a horizontal surface) by a relatively small angle α. This allows a user to use the portable computing device 400 in a similar way a user writes on a piece of paper. Also, in this first orientation, the front vertical axis 410 of the display 402 of the portable computing device 400 is separated from a positive horizontal axis by an angle θ of approximately +90 degrees. Thus, the first orientation of the portable computing device 400 may be described with reference to two angle parameters: (i) the inclination angle α of the display 402 being relatively small and (ii) the rotation angle θ of the display being approximately +90 degrees.

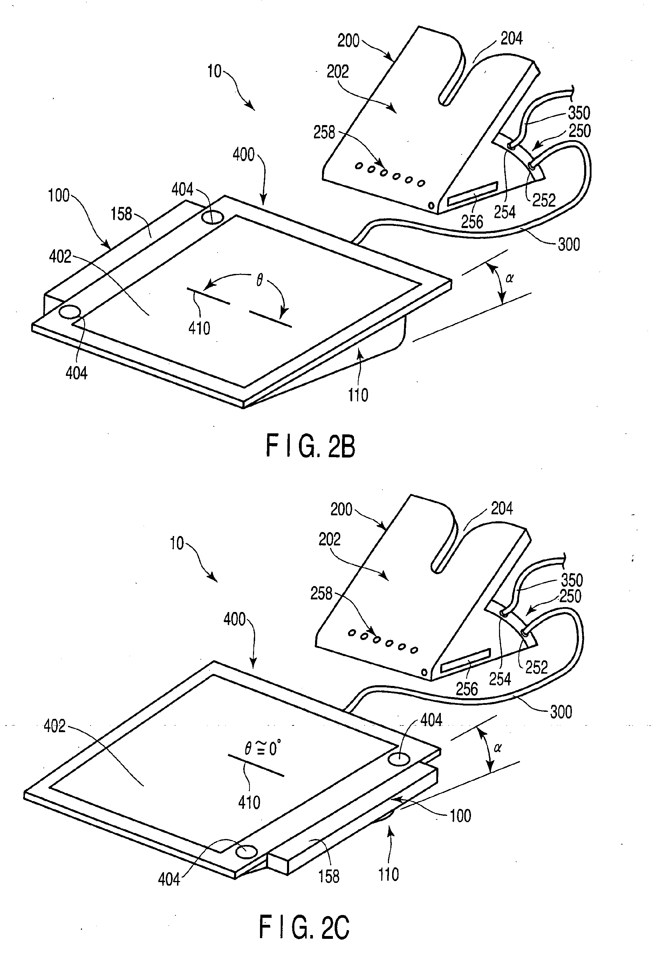

FIG. 2B illustrates a perspective view of the exemplary docking station 10 with a portable computing device 400 mounted on the first supporting device 100 in a second orientation in accordance with another embodiment of the invention. As previously discussed and shown in FIG. 1, the mounting surface 150 of the first supporting device 100 is adapted to rotate with respect to the base 110 about the longitudinal axis of the attachment device 102. Accordingly, in this example, the mounting surface 150 of the first supporting device 100 has been rotated such that the front vertical axis 410 of the display 402 is separated from the positive horizontal axis by an angle θ of approximately +180 degrees. This allows a user to view the display 402 in different orientation. Thus, the second orientation of the portable computing device 400 may be described with reference to two angle parameters: (i) the inclination angle α of the display 402 being relatively small and (ii) the rotation angle θ of the display being approximately +180 degrees.

FIG. 2C illustrates a perspective view of the exemplary docking station 10 with a portable computing device 400 mounted on the first supporting device 100 in a third orientation in accordance with another embodiment of the invention. As previously discussed and shown in FIG. 1, the mounting surface 150 of the first supporting device 100 is able to rotate with respect to the base 110 about the longitudinal axis of the attachment device 102. Accordingly, in this example, the mounting surface 150 of the first supporting device 100 has been rotated such that the front vertical axis 410 of the display 402 is separated from the positive horizontal axis by an angle θ of approximately zero (0) degree. Thus, the third orientation of the portable computing device 400 may be described with reference to two angle parameters: (i) the inclination angle α of the display 402 being relatively small and (ii) the rotation angle θ of the display being approximately 0 degrees.

Accordingly, the docking station 10 allows a user to orient the portable computing device 400 mounted on the first supporting device 100 to a plurality of orientations that facilitate using the touch-sensitive display 402 like one would access a piece of paper. That is, the low inclination angle α between the mounting surface 150 and the bottom of the base 110 allows the display 402 to be oriented substantially horizontal, e.g. similar as a piece of paper lies on a flat table surface. The fact that the mounting surface 150 is able to rotate with respect to the base allows a user to orient the front vertical axis 410 of the display 402 in any direction, such as between landscape and portrait orientations for example. Thus, the docking station 10 provides substantial flexibility to a user in orienting a portable computing device.

FIG. 3A illustrates a perspective view of the exemplary docking station 10 with the portable computing device 400 in a fourth orientation mounted on the first supporting device 100, and the first supporting device 100, in turn, mounted on the second supporting device 200 in accordance with another embodiment of the invention. In some cases, a user may desire to view the display 402 of the portable computing device 400 in a similar manner a user views a display of a desktop computer, i.e. in a more vertical orientation. The docking system 10 allows such vertical orientation of the portable computing device 400 by having the first supporting device 100 mount on the more-inclined mounting surface 202 of the second supporting device 200. As discussed in more detail below and shown in FIG. 1, the underside of the first supporting device 100 is configured to engage with the groove engagement 204 of the mounting surface 202 (see FIG. 1) such that the mounting surface 150 lies substantially flat on the mounting surface 202 of the second supporting device 200.

In such fourth orientation, the inclination angle β of the display 402 of the portable computing device 400 is relatively large. The inclination angle β can be selected to allow a user to comfortably view the display 402 of the portable computing device 400 in a similar manner a user typically views a display of a desk top computer. Also, in the fourth orientation, the rotation angle θ (i.e. the angle between the front vertical axis 410 of the display 402 and the horizontal axis) is approximately +90 degrees. As illustrated in FIGS. 3B-3C, the mounting surface 150 of the first supporting device 100 can still rotate with respect to the base 110 while the first supporting device 100 is supported on the second supporting device 200. Accordingly, the fourth orientation of the portable computing device 400 may be described reference to two angle parameters: (i) the inclination angle β being of the display 402 being relatively large and the rotation angle θ of the display 402 being approximately 90 degrees.

FIG. 3B illustrates a perspective view of the exemplary docking station 10 with the portable computing device 400 in a fifth orientation mounted on the first supporting device 100, and the first supporting device 100, in turn, mounted on the second supporting device 200 in accordance with another embodiment of the invention. In this fifth orientation, the mounting surface 150 has been rotated with respect to the base (not shown) such that the rotation angle θ is approximately 180 degrees. Thus, the fifth orientation of the portable computing device 400 may be described with reference to two angle parameters: (i) the inclination angle β of the display 402 being relatively large and (ii) the rotation angle θ of the display 402 being approximately 180 degrees.

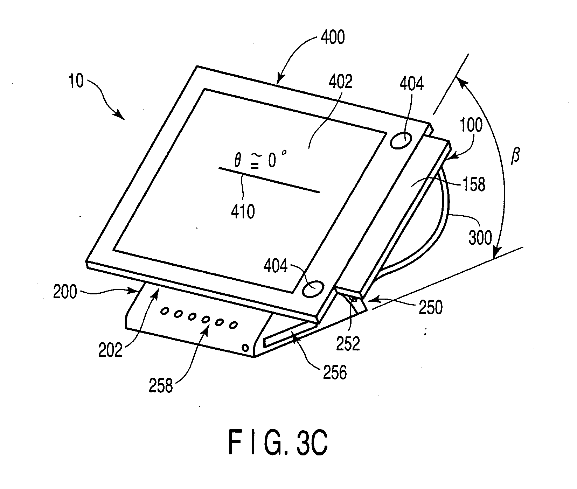

FIG. 3C illustrates a perspective view of the exemplary docking station 10 with the portable computing device 400 in a sixth orientation mounted on the first supporting device 100, and the first supporting device 100, in turn, mounted on the second supporting device 200 in accordance with another embodiment of the invention. In the sixth orientation, the mounting surface 150 has been rotated with respect to the base such that the rotation angle θ is approximately zero (0) degrees. Thus, the sixth orientation of the portable computing device 400 may be described with reference to two angle parameters: (i) the inclination angle β of the display 402 being relatively large and (ii) the rotation angle θ of the display 402 being approximately 0 degrees. It shall be understood that the rotation angle θ need not be restricted to 0, 90, and 180 degrees, but can encompass any angle between and including zero (0) and 360 degrees.

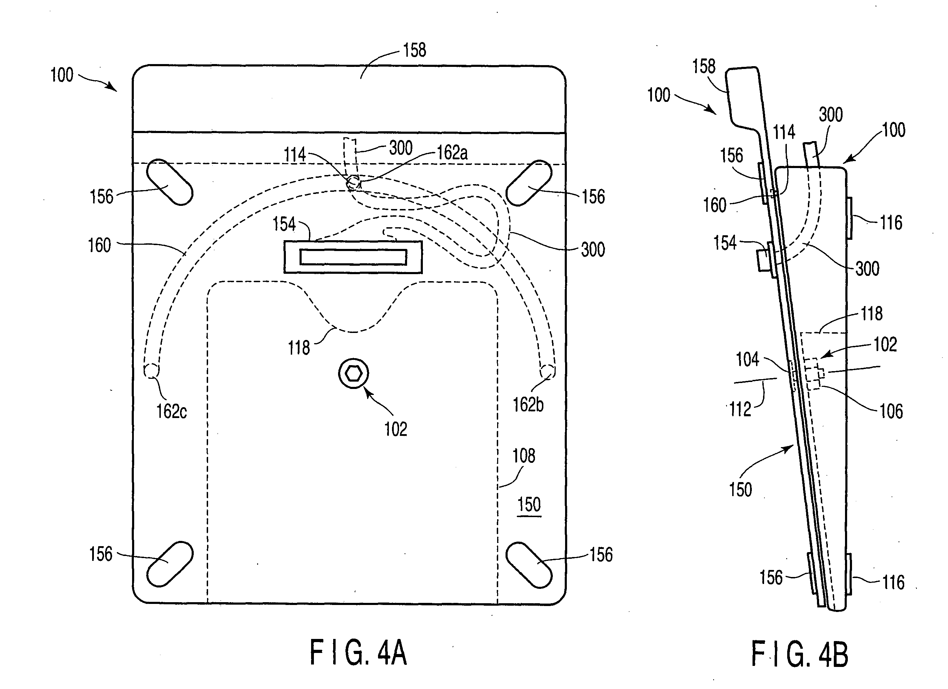

FIGS. 4A-4B illustrate detailed front and side views of the exemplary first supporting device 100 in a first orientation in accordance with another embodiment of the invention. As previously discussed, the first supporting member 100 comprises the mounting surface 150, the base 110, and the attachment device 102 to rotationally attach the mounting surface 150 onto the base 110. In this example, the attachment device 102 comprises a flat head bolt 104 and a nut 106. The head of the flat head bolt 104 is substantially flush with the mounting surface 150 and the threaded portion extends through an opening of the mounting surface 150. The nut 106 is situated in a recess portion defined by an inner wall 108 of the base 110, and threads onto the threaded portion of the flat head bolt 104. The longitudinal axis of the attachment device 102 forms the rotational axis 112 of the mounting surface 150. Of course, it is contemplated that the attachment device 102 may be formed by a variety of hardware components, so long as the selected hardware component enables rotational coupling of the first supporting device 100 to the base 110.

As previously discussed, the connector 154 for attachment to a corresponding connector of a portable computing device is mounted on the mounting surface 150. The communications link 300, which communicatively couples the first and second supporting members 100 and 200, is electrically attached to the connector 154 and is situated in a recess formed between the mounting surface and the base 110. The communications link 300 is sized so that the mounting surface 150 can be rotated about the rotational axis 112 between rotation angles (e.g., 0 ≤ θ ≤ 180 degrees). Also, as discussed, the first supporting member 100 includes a handle 158 attached or integral with the mounting surface 150 to facilitate the handling of the first supporting device 100 and the rotating of the mounting surface 150 with respect to the base 110.

The mounting surface 150 comprises one or more elastomeric supporting members 156 to provide a gentle contact to the underside of a portable computing device. The mounting surface 150 further comprises a track 160 including a semi-circular recess formed on the underside of the_mounting surface 150. The track 160 further includes a plurality of catches 162a-162c situated respectively at angles 90 degrees, zero (0) degrees, and 180 degrees along the semi-circular recess. The catches 162a-162c are deeper regions of the track 160 which are employed to impede the rotational movement of the mounting surface 150 at rotation angles θ = 90, 180 and/or zero (0) degrees.

The base 110 comprises a guide post 114 situated on the upper surface of the base 110. The guide post 114 is situated within the semi-circular recess which forms the track 160. As the mounting surface 150 is rotated about the rotational axis 112, the angular position of the guide post 114 within the track 160 changes. If the mounting surface 150 is at a rotation angle θ of 90 degrees as shown in FIGS. 4A-4B, the guide post 114 is situated within the catch 162a.

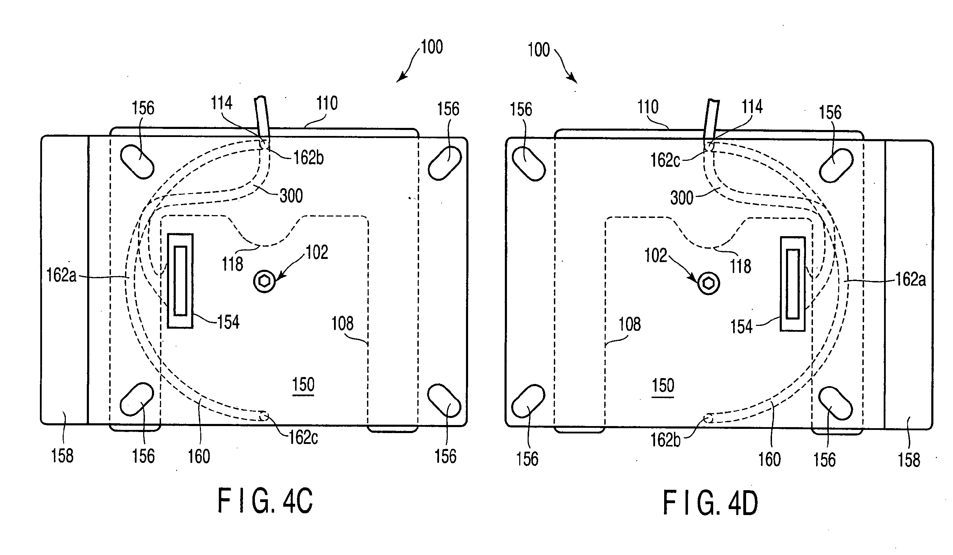

FIG. 4C illustrates a top view of the exemplary first supporting device 100 in a second orientation in accordance with another embodiment of the invention. In the second orientation, the mounting surface 150 is at a rotation angle θ of 180 degrees. At such position, the guide post 114 is situated within the catch 162b. It is noted that the communications link 300 has unraveled to accommodate the new position of the connector 154 at the second orientation. The catch 162b may also serve as stop to prevent further rotation of the first supporting member 150 in a counter-clockwise direction.

FIG. 4D illustrates a top view of the exemplary first supporting device 100 in a third orientation in accordance with another embodiment of the invention. In the second orientation, the mounting surface 150 is at a rotation angle θ of zero (0) degrees. At such position, the guide post 114 is situated within the catch 162c. It is noted that the communications cable 300 has unraveled to accommodate the new position of the connector 154 at the third orientation. The catch 162c may also serve as a stop to prevent further rotation of the first supporting member 150 in a clockwise direction.

Referring again to FIGS. 4A-4B, the base 110 further comprises one or more elastomeric support members 116 disposed on its underside to provide a gentle contact of the first supporting device 100 to a support surface, such as a table. In addition, the inner wall 108 of the base 110 further includes a protrusion 118 configured to mate with the groove engagement 204 of the second supporting device 200, as discussed in more detail as follows.

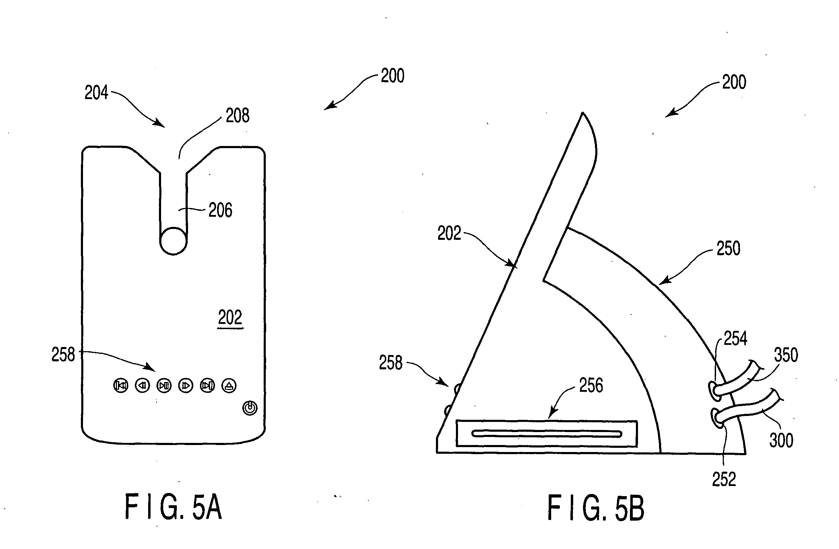

FIGS. 5A-5B illustrate front and side views of the exemplary second supporting device 200 in accordance with another embodiment of the invention. As discussed, the second supporting device 200 comprises a mounting surface 202 to which the first supporting device 100 mounts and a base 250 which supports and may be integral with the mounting surface 202. The mounting surface 202 includes an engagement member 204 which engages with a corresponding member of the first supporting device 100. In this example, the engagement member 204 is a groove including the lower narrower portion 206 and the upper wider portion 208. As discussed in more detail as follows, the narrow portion 206 of the groove 204 receives the nut 106 of the attachment device 102, thereby providing lateral stability of the first supporting device 100. The upper portion 208 of the groove 204 receives from above the protrusion 118 of the inner wall 108 of the base 110, which is shaped to appropriately mate with the upper portion 208 of the groove 204. The mounting surface 202 is inclined with respect to the bottom of the base 250 (which is typically disposed on a horizontal surface) by a relatively large angle β, where β > α in one embodiment. The base 250 of the second supporting device 200 may include connectors 252 and 254 for the communications links 300 and 350, respectively.

The second supporting device 200 may further include an optical disc drive 256 (e.g. a digital versatile disc 'DVD" drive) and/or other peripheral devices housed in the base 250. Control buttons 258 for the optical disc drive 256 and/or other peripheral devices may be provided through a lower portion of the mounting surface 202.

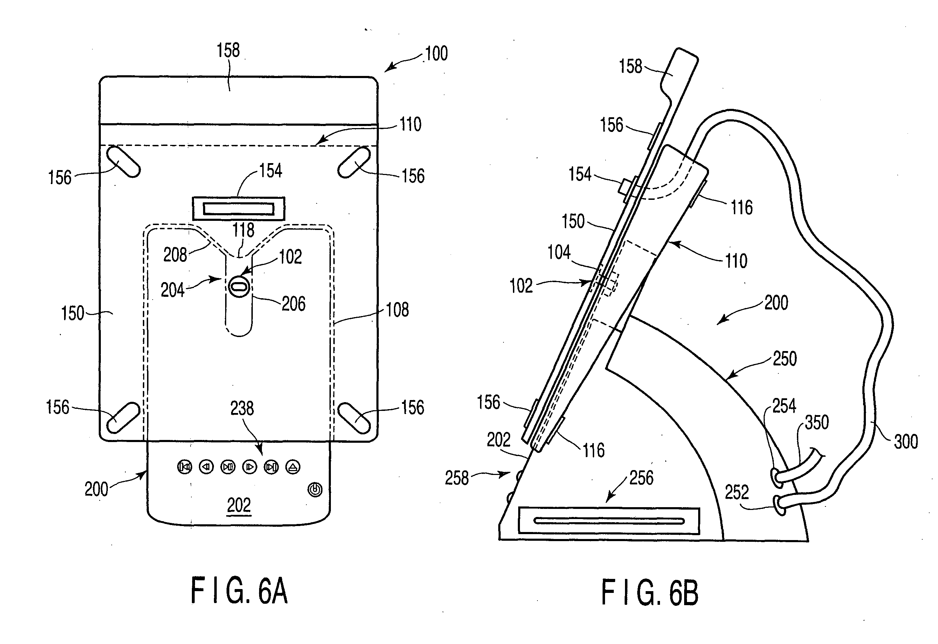

FIGS. 6A-6B illustrate front and side views of the exemplary first supporting device 100 mounted on the exemplary second supporting device 200 in accordance with another embodiment of the invention. As shown, the underside of the recess portion of the base 110 lies substantially flushed with the mounting surface 202 of the second supporting device 200. The lower narrower portion 206 of the groove 204 allows for the nut 106 to be received therein, thereby providing lateral stability of the first supporting device 100 while it is on the second supporting device 200. The upper wider portion 208 of the groove 204 receives from above the protrusion 118 of the inner wall 108 of the base 110, thereby supporting the first supporting device 100. The inner wall 108 of the base 110 is sized and configured to snugly receive the upper two-thirds portion of the mounting surface 202, thereby providing additional lateral stability of the first mounting device 100 while it is on the second supporting device 200.

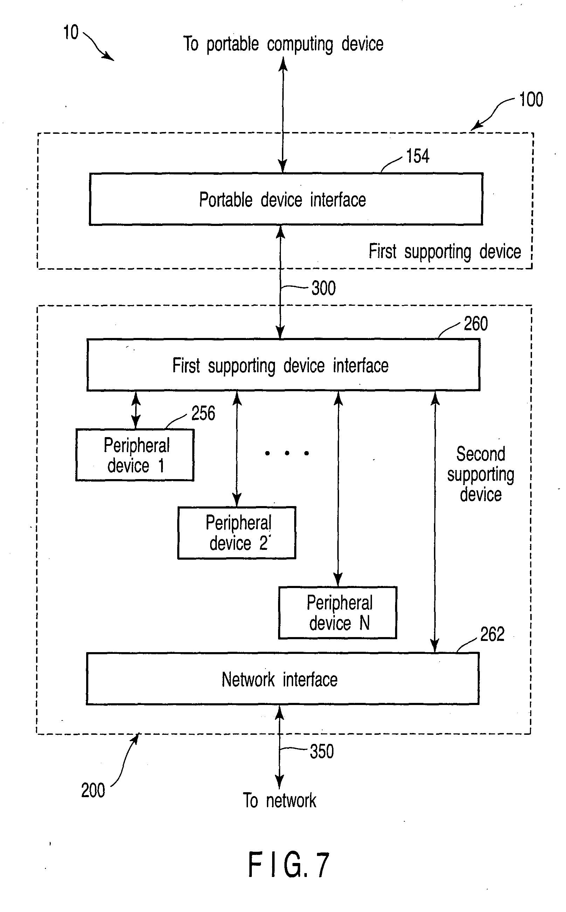

FIG. 7 illustrates a block and schematic diagram of the exemplary docking station 10 in accordance with another embodiment of the invention. As discussed, the first supporting device 100 comprises a portable device interface 154, such as a connector, to electrically connect to a portable computing device. The portable device interface 154 is electrically coupled to the first communications link 300. The second supporting device 200 comprises a first supporting device interface 260 which is electrically coupled to the first communications link 300. The first supporting device interface 260 is, in turn, electrically coupled to a network interface 262, and one or more peripheral devices 1-N, such as optical disk drive 256. The network interface 262 is, in turn, coupled to a network or other device by way of the second communications link 350.

Thus, properly docked on the docking station 10, a portable computing device is communicatively coupled to a network or other device by way of the portable device interface 154 of the first supporting device 100, the first communications link 300, the first supporting device interface 260 and network interface 262 of the second supporting device 200, and the second communications link 350. In addition, the portable computing device may further be communicatively coupled to the one or more peripheral devices 1-N that are housed in the second supporting device 200.

In the foregoing specification, the disclosure has been described with reference to specific embodiments thereof. It will, however, be evident that various modifications and changes may be made thereto without departing from the broader spirit and scope of the embodiments of the invention. The specification and drawings are, accordingly, to be regarded in an illustrative rather than a restrictive sense.

## Claims

1. A docking station (10), **characterized by** comprising:
a first device (100) including
a first mounting surface (150) for supporting a portable computing device (400) thereon, and
a connector (154) for mating with a corresponding connector of said portable computing device (400);
a second device (200) adapted for coupling to a first communications link (350); and
a second communications link (300) to couple said connector (154) of said first device (100) to said second device (200).

2. The docking station according to claim 1, **characterized in that** said first communications link (350) is communicatively coupled to a network.

3. The docking station according to claim 1, **characterized in that** said second device (200) comprises a second mounting surface (202) to support said first device (100) thereon and a first base (250) to support said second mounting surface (202).

4. The docking station according to claim 3, **characterized in that** said second mounting surface (202) is inclined with respect to an underside of said first base (250) by a first angle (β) .

5. The docking station according to claim 4, **characterized in that** said first device (100) comprises a second base (110) for supporting said first mounting surface (150) .

6. The docking station according to claim 5, **characterized in that** said first mounting surface (150) is inclined with respect to an underside of said second base (110) by a second angle (α) .

7. The docking station according to claim 6, **characterized in that** said first angle (β) is greater than said second angle (α).

8. The docking station according to claim 3, **characterized in that** said first device (100) comprises a first engagement member to engage with a second engagement member of said second device (200) in order for said second mounting surface (202) to support said first device (100).

9. The docking station according to claim 8, **characterized in that** said first engagement member comprises a protrusion (118), and said second engagement member comprising a groove (204) sized and is configured to mate with said protrusion (118).

10. The docking station according to claim 1, **characterized in that** said first device (100) comprises a base (110) to support said first mounting surface (150).

11. The docking station according to claim 10, **characterized in that** said first mounting surface (150) is rotationally coupled to said base (110) by way of an attachment device (102).

12. The docking station according to claim 11, **characterized in that** said first device (100) further comprises a track (160) and a guide post (114) situated within said track (160) to guide a rotation of said first mounting surface (150) with respect to said base (110).

13. The docking station according to claim 12, **characterized in that** said track (160) is formed as a recess on an underside of said first mounting surface (150) and said guide post (114) is on a top surface of said base (110).

14. The docking station according to claim 13, **characterized in that** said track (160) comprises a plurality of catches (162a, 162b, 162c) positioned at distinct locations on said track (160), and at least one of said catches (162a, 162b, 162c) acts as a stop to prevent further rotation in a particular direction of said first mounting surface (150).
